Europäisches Patentamt

European Patent Office

Office européen des brevets

(19)

(11) Veröffentlichungsnummer: **0 226 094**
**B1**

(12) # EUROPÄISCHE PATENTSCHRIFT

(45) Veröffentlichungstag der Patentschrift:
04.07.90

(21) Anmeldenummer: 86116511.6

(22) Anmeldetag: 27.11.86

(51) Int. Cl.⁵: **B29C 65/02**, B29C 65/20
// B29L31:18

(54) **Verfahren zum Verbinden von Hohlprofilkörpern mit Formkörpern aus thermoplastischem Kunststoff.**

(30) Priorität: 07.12.85 DE 3543283

(43) Veröffentlichungstag der Anmeldung:
24.06.87 Patentblatt 87/26

(45) Bekanntmachung des Hinweises auf die Patenterteilung:
04.07.90 Patentblatt 90/27

(84) Benannte Vertragsstaaten:
BE DE FR GB IT NL

(56) Entgegenhaltungen:
CH-A- 219 733
DE-A- 2 603 615
FR-A- 1 260 210
FR-A- 1 420 498
GB-A- 146 130
US-A- 2 433 546
US-A- 4 588 543

(73) Patentinhaber: Röhm GmbH, Kirschenallee
Postfach 4242, D-6100 Darmstadt 1(DE)

(72) Erfinder: Gross, Heinz, Dr.-Ing. Dipl.-Ing., Am
Erlenbusch, D-6109 Mühltal(DE)

ACTORUM AG

## Beschreibung

<u>Gebiet der Erfindung</u>

Die Erfindung betrifft ein Verfahren zum stirnseitig dichten Verbinden eines Hohlprofilkörpers aus thermoplastischem Kunststoff mit einem Formkörper aus einem damit verschweißbaren thermoplastischem Kunststoff. Bei der Herstellung derartiger Verbindungen tritt das Problem auf, mit einfachen Mitteln eine gas- und flüssigkeitsdichte-Verbindung zu erzeugen. Diese Forderung wird beispielsweise bei der Verbindung von Wärmetauscherrohren oder -flächen mit Sammelkästen oder beim Anschluß von Kunststoffrohren an einen Hohlkörper aus Kunststoff gestellt.

<u>Stand der Technik</u>

In der US-A 4 114 597 wird der Anschluß einer Stegplatte aus Kunststoff, die als Sonnenkollektorfläche dient, an ein Sammelrohr beschrieben. Das Sammelrohr besteht aus einem extrudierten Profil mit einem seitlichen Schlitz, in welchen das stirnseitige Ende der Stegplatte eingeführt wird, so daß deren Hohlräume in das Innere des Sammelrohres münden. Das stirnseitige Ende der Stegplatte muß in dem Schlitz des Sammelrohres mittels einer dichtenden Klebemasse befestigt werden, was mit einem erheblichen Arbeitsaufwand verbunden ist. Die Abdichtung des Schlitzes des Sammelrohres an den seitlichen Kanten der Stegplatte erfordert zusätzliche Maßnahmen.

In der DE-A 26 57 468 wird vorgeschlagen, eine Steckverbindung, bei der ein Sammelrohr mit seitlichen Rohrstutzen so in die Stirnseite einer Stegplatte eingeführt wird, daß jeder Rohrstutzen in einer Hohlkammer der Stegplatte mündet, mit einer dickwandigen Kunststoffschicht zu umhüllen und dadurch abzudichten. Dadurch entsteht ein hoher Materialbedarf für die umhüllende Dichtungsmasse.

Gemäß DE-A 30 08 055 wird an der Stirnseite einer Stegplatte durch Extrusion ein Sammelrohr gebildet. Zur Erzeugung des Sammelrohrkanals wird ein Kernstück eingelegt und nach dem Extrusionsverfahren herausgezogen. Für das Verfahren wird eine spezielle Extrusionsvorrichtung benötigt, die mit einer Transportvorrichtung für die Stegplatte verbunden ist. Da das Herausziehen des Kernstücks oft Schwierigkeiten bereitet, wird im deutschen Gebrauchsmuster 79 27 236 vorgeschlagen, anstelle des Kernstücks ein dünnwandiges Sammelrohr mit seitlichen Anschlußstutzen auf die Stirnseite der Stegplatte aufzusetzen und danach das stirnseitige Ende der Stegplatte und das Sammelrohr durch eine extrudierte Kunststoffschicht zu ummanteln.

Aus der GB-A 146 130 ist es bekannt, bei der Herstellung eines Wärmetauschers eine Mehrzahl von Rohren mit einem Rohrboden dadurch zu verbinden, daß man die Enden der Rohre in offene Mulden, die in den Rohrboden eingeformt sind, in der Weise einsetzt, daß die Rohrenden an ·der inneren Wandung der Mulden anliegen und mit dem Rand der jeweiligen Muldenwandung eine gemeinsame Kante bilden. In dieser Stellung werden die aneinanderliegenden Kanten mittels eines Schweißbrenners verschweißt.

Aus der FR-A 1 420 498 ist ein Verfahren zum Verbinden von flachen Kunststoffteilen bekannt, mit dem eine Verbesserung der davor ausgeübten Verbindungsverfahren bezweckt wird. Gemäß den dort erwähnten älteren Verfahren wurden entweder die zu verbindenden Kunststoffteile mittels beheizter Schweißbacken zusammengepreßt und bis zum Verschmelzen erhitzt, oder es wurde zur Herstellung eines Behälters in die Stirnseite eines Rohrabschnittes mittels eines angepaßten Formstempels eine Folie eingepreßt und an der Nahtstelle mit der Stirnseite des Rohrabschnittes durch Anlegen einer erhitzten Platte verschweißt. Die Verbesserung bestand nun darin, die zu verbindenden Kunststoffteile unterhalb ihrer Kanten mittels Preßbacken zusammenzudrücken und die herausragenden zusammenliegenden Kanten mittels eines Heizstrahlers zu erhitzen und zu einer Wulstnaht zu verschmelzen.

In der DE-A 26 03 615 wird ein Verfahren zum Verschweißen eines Rohrbündels aus thermoplastischem Kunststoff beschrieben, bei dem die Stirnflächen der parallel und einander tangierend angeordneten Rohre unter Druck in entsprechend angeordnete ringförmige Nuten einer beheizten Platte eingeführt, zum Schmelzen erhitzt und untereinander verschweißt werden.

<u>Aufgabe und Lösung</u>

Der Erfindung liegt die Aufgabe zugrunde, ein verbessertes Verfahren zum stirnseitig dichten Verbinden eines Hohlprofilkörpers aus thermoplastischem Kunststoff mit einem dünnwandigen Formkörper aus einem damit verschweißbaren thermoplastischem Kunststoff zu finden, das nicht die Nachteile der bekannten Verfahren aufweist. Das Verfahren soll einfach, d.h. ohne Zuhilfenahme komplizierter Vorrichtungen und ohne den Einsatz zusätzlicher Werkstoffe wie Kleber oder Dichtmassen ausführbar sein. Es soll vielseitig sein und den Anschluß beliebig gestalteter Hohlprofilkörper, wie z.B. Rohre oder Stegplatten, an dünnwandige Formkörper gestatten. Weiterhin soll es möglich sein, eine Mehrzahl gleicher oder verschiedener Hohlprofilkörper an einen Kunststofformkörper anzuschließen. In jedem Falle ist eine vollständig dichte Verbindung erforderlich.

Die Aufgabe wird durch das Verfahren gemäß den Patentansprüchen gelöst. In Anbetracht der Vielzahl von bekannten Lösungsvorschlägen muß es überraschen, daß eine Lösung gefunden werden konnte, die sich gegenüber dem Stand der Technik nicht nur durch einen verminderten Material- und Arbeitsaufwand auszeichnet, sondern auch in der Vielseitigkeit den bekannten Verfahren überlegen ist.

Mit besonderem Vorteil läßt sich das erfindungsgemäße Verfahren zur Herstellung von Wärmetauschern anwenden. Zu diesem Zweck kann eine Vielzahl von rohr- oder flächenförmigen Austauschelementen an ein Sammelkasten bzw. an ein Element eines solchen Sammelkastens angeschlossen werden. Auf die gleiche Weise können Anschlußleitungen an den Sammelkasten oder deren Aufbauelemente angeschlossen werden.

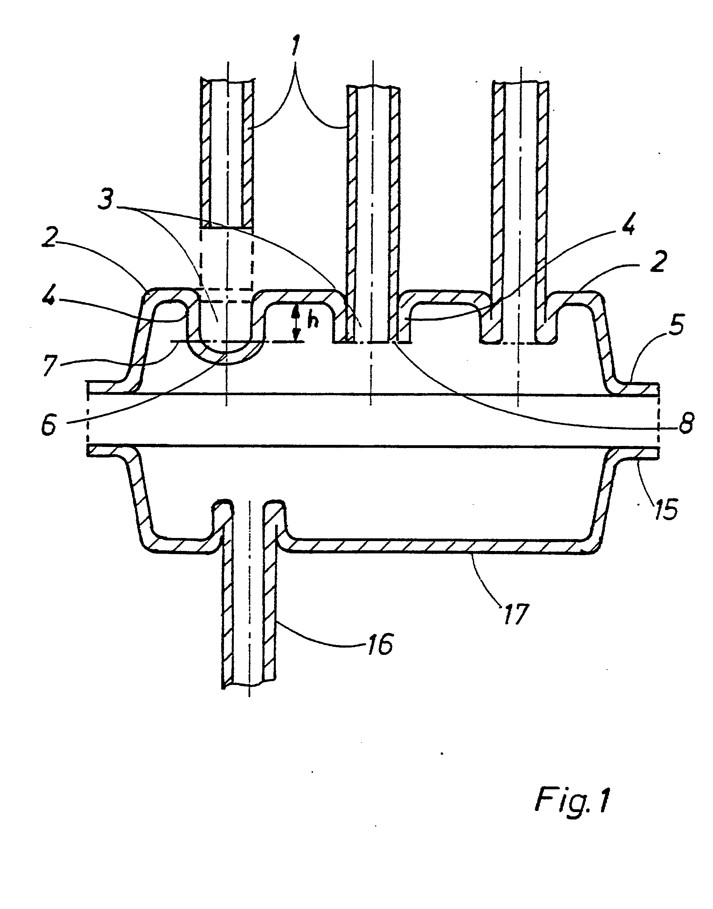

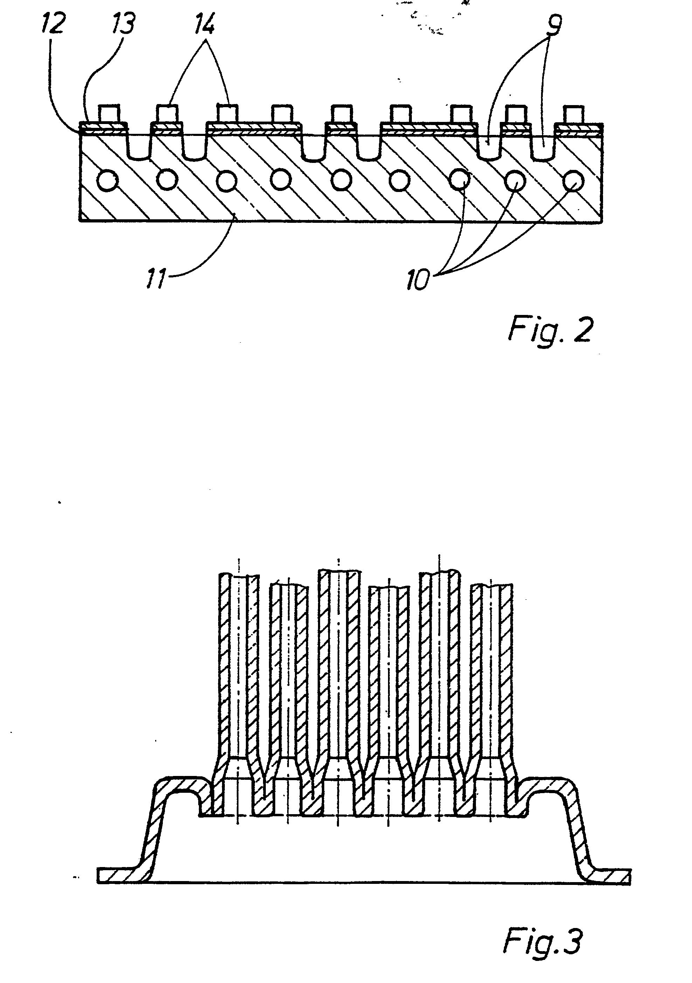

Die Ausführung des Verfahrens wird in den Figuren 1 und 2 am Beispiel der Herstellung eines Wärmetauschers erläutert.

**Figur 1** stellt einen Querschnitt durch zwei Hälften eines Sammelkastens und der anzuschließenden Austauscherkörper eines Wärmetauschers in verschiedenen Verfahrensstufen dar.

**Figur 2** zeigt einen Schnitt durch das zur Herstellung des Wärmetauscherelements gemäß Fig. 1 verwendete Werkzeug.

**Figur 3** stellt einen Schnitt durch einen aus mehreren Hohlprofilelementen gebildeten Block und durch einen damit zu verbindenden Formkörper dar.

<u>Ausführung der Erfindung</u>

Der beim Verfahren der Erfindung an einen Kunststofformkörper anzuschließende Hohlprofilkörper muß wenigstens an seiner Stirnseite ein Endstück mit gleichbleibendem Querschnitt aufweisen. Als Stirnseiten werden die Seiten des Hohlprofilkörpers bezeichnet, an denen die Hohlräume nach außen münden. Das Endstück mit gleichbleibendem Querschnitt muß wenigstens eine ausreichende Länge haben, um es in die daran angepaßte Mulde in dem Formkörper einführen und mit dieser verschweißen zu können. Dafür genügt in der Regel eine Länge von 5 - 20 mm. Jenseits dieses Endstückes kann sich der Querschnitt des Hohlprofilkörpers in beliebiger Weise ändern. In der Praxis haben durch Extrusion hergestellte Hohlprofilkörper mit einem über die ganze Länge gleichbleibenden Querschnitt, wie z.B. Rohre oder Stegplatten, besondere Bedeutung. Die Rohre können beispielsweise einen runden oder polygonalen Querschnitt haben. Geeignete Stegplatten bestehen vorzugsweise aus zwei parallelen Außenwänden und einer Vielzahl von Stegen, welche die Außenflächen im Innern der Stegplatte und an ihren Seitenkanten einstückig miteinander verbinden. Die Wandstärke des anzuschließenden Endstückes liegt vorzugsweise im Bereich 0,5 - 5 mm. Der Hohlprofilkörper kann seinerseits aus einem Block, bestehend aus einer Mehrzahl von stirnseitig miteinander verschweißten oder verklebten Hohlprofilelementen, bestehen und kann in diesem Falle im Bereich seiner äußeren Umrandung mit einem Formkörper verbunden werden.

In der Regel ist der Hohlprofilkörper durch eine Stirnfläche begrenzt, die rechtwinklig zu den Wandungen des Endstückes liegt. Die Erfindung gestattet jedoch auch den Anschluß von schiefwinklig geschnittenen Endstücken.

Der dünnwandige Formkörper, an den der Hohlprofilkörper angeschlossen wird, kann etwa die gleiche Wandstärke wie dieser aufweisen; vorzugsweise liegt die Wandstärke beim 0,5- bis 2-fachen der Wandstärke des Hohlprofilkörpers. In der Regel ist der Formkörper in dem Bereich, wo der Hohlprofilkörper angeschlossen wird, flächig mit einer im wesentlichen gleichförmigen Wanddicke ausgebildet.

Zum Anschluß der Hohlprofilkörper (1) enthält der Formkörper (2) eine oder mehrere Mulden (3), deren innere Begrenzung dem stirnseitigen Profil des Hohlprofilkörpers angepaßt ist. Die Mulde (3) wird durch einen von der Wandung des Formkörpers (2) abstehenden Kragrand (4) gebildet, der so gestaltet ist, daß das eingesetzte Ende des Hohlprofilkörpers möglichst genau daran anliegt. Das Verfahren der Erfindung läßt jedoch eine Toleranz bis zu etwa 1 mm zwischen den inneren Abmessungen der Mulde und den äußeren Abmessungen des Endstückes zu. Der Kragrand hat zweckmäßig eine Höhe von etwa 5 - 20 mm.

Die Mulden (3) können gleichzeitig mit der Herstellung des Formkörpers (2) erzeugt werden, beispielsweise wenn dazu das Spritzgußverfahren angewendet wird. Das gleiche gilt, wenn der Formkörper durch Umformung einer ebenen Kunststoffplatte erzeugt wird. Dabei kann gleichzeitig mit einem Flanschrand (5) oder sonstigen Formelementen eine Mehrzahl von Mulden (3) erzeugt werden, die zunächst an der Basis durch eine Kunststofffläche (6) verschlossen sind. Durch Abschneiden der Fläche (6), beispielsweise mittels eines Fräsers, auf der Ebene (7) wird die Mulde geöffnet. Auf entsprechende Weise kann in einen bereits ausgeformten Formkörper nachträglich eine oder mehrere Mulden (3) eingeformt werden, indem man den Formkörper an diesen Stellen lokal auf die Umformungstemperatur erwärmt und die Mulde mit einem geeigneten Werkzeug einformt. Zur Herstellung einer runden, an der Basis offenen Mulde kann in die Fläche des Formkörpers (2) zunächst ein Loch gestanzt oder gebohrt werden, durch welches nach dem Erwärmen auf die Umformtemperatur ein konisches Werkzeug gedrückt wird, das in einen Schaft vom Querschnitt des anzuschließenden Hohlkörpers übergeht. Dabei wird das Loch auf die Schaftdicke aufgeweitet und gleichzeitig der Kragrand (4) ausgebildet.

Zur Herstellung einer dichten Verbindung wird das stirnseitige Ende des Hohlprofilkörpers (1) so in die Mulde (3) eingeführt, daß die Stirnseite des Hohlprofilkörpers mit dem Ende des Kragrandes (4) eine gemeinsame Kante (8) bildet. Es ist vorteilhaft, wenn die gemeinsame Kante genau in einer Ebene liegt, jedoch sind im allgemeinen Abweichungen bis zu etwa 1 oder 2 mm tolerierbar.

Die dichte Verbindung wird nun dadurch hergestellt, daß man die an der gemeinsamen Kante (8) aneinander liegenden Kunststoffteile mittels des nachfolgend näher beschriebenen Schweißwerkzeugs bis zur Schmelztemperatur erhitzt und auf ihrem ganzen Umfang miteinander verschweißt. Nach dem Abkühlen unter die Erweichungstemperatur besteht eine dichte, mechanisch feste Verbindung.

Vorzugsweise wird die ganze Kante (8) gleichzeitig erhitzt und verschweißt. Werden in einen Formkörper (2) mehrere Hohlprofilkörper (1) eingesetzt, so werden sie vorzugsweise gemeinsam gleichzeitig verschweißt. Dazu wird erfindungsgemäß das in Fig. 2 dargestellte Werkzeug verwendet. Es enthält Nuten (9), die der Gestalt der zu verschweißenden Kanten (8) angepaßt sind. Die Nuten (9) sind vorzugsweise an der Eingangsseite etwas weiter als an der Grundfläche und geringfügig breiter als die Kante (8), so daß sich diese leicht in die Nut (9) einfügen läßt. Durch ein Heiz- und Kühlsystem (10) kann das in Fig. 2 dargestellte Werkzeug insbesondere im Bereich der Nuten (9) auf die Schmelztemperatur des Kunststoffes erhitzt werden. Nach dem Einsetzen der Kante (8) in die Nut (9) schmilzt der Kunststoff und wird durch Andrücken des Werkzeugs an die Kante (8) verschweißt. Unter dem Anpreßdruck kann geschmolzenes Kunststoffmaterial neben den eingefügten Kunststoffteilen in der Nut hochsteigen. Durch eine vom Werkzeugbodenteil (11) mittels einer Isolationsschicht (12) thermisch isolierte Schicht (13) aus einem gut wärmeleitenden Material, insbesondere Metall, die erforderlichenfalls mittels eines durch Kanäle (14) strömenden Kühlmittels unterhalb der Schmelztemperatur des Kunststoffes gehalten wird, wird die aufsteigende Schmelze zum Erstarren gebracht und am Austritt aus der Nut gehindert. Nach dem Verschmelzen der Kunststoffteile wird der Werkzeugboden (11) gekühlt und das Werkzeug nach Abkühlung der Schweißstelle unter die Erweichungstemperatur abgenommen.

Um einen geschlossenen Sammelkasten zu erzeugen, kann ein zweiter Kunststoffkörper (17) mit einem Flanschrand (15) erzeugt werden, der mit dem Flanschrand (5) des ersten Formkörpers übereinstimmt. An den zweiten Formkörper (17) kann durch das erfindungsgemäße Verfahren eine Anschlußleitung (16) angeschlossen werden. Durch Zusammenlegen und Verschweißen, Verschrauben oder Zusammenspannen der Flanschränder (5) und (15) entsteht ein geschlossener Sammelkasten.

Voraussetzung für die Verschweißbarkeit der Hohlprofilkörper (1) mit dem Formkörper (2) ist die Verschweißbarkeit der zu ihrer Herstellung verwendeten Kunststoffe. Beide müssen schmelzbar und miteinander so verträglich sein, daß sich die Schmelzen an der Grenzfläche in ausreichender Weise miteinander verbinden und nach dem Abkühlen eine dauerhafte Schweißverbindung bestehen bleibt. Diese Voraussetzung ist vor allem dann erfüllt, wenn die Hohlprofilkörper (1) aus dem gleichen Kunststoff wie der Formkörper (2) bestehen. Unterschiede in der Einfärbung oder in den sonstigen üblichen Zusätzen stehen der Verschweißung sonst gleicher Kunststoffe in der Regel nicht entgegen.

Geeignet sind alle thermoplastisch verarbeitbaren Kunststoffe von ausreichender Steifigkeit und Formbeständigkeit. Beispiele sind Polyäthylen, Polypropylen, Polystyrol, Polymethylmethacrylat, Polyvinylchlorid, Polycarbonat, thermoplastische Polyester, Polyoxymethylen, Polyamide oder Polysulfone. Aber auch unterschiedliche Kunststoffe sind in vielen Fällen dauerhaft miteinander verschweißbar. Dazu gehören z.B. folgende Paare:
Polymethylmethacrylat - Polyvinylchlorid
Polymethylmethacrylat - Acrylnitril-Butadien-Styrol-Kunststoffe

Polyvinylchlorid - Acrylnitril-Butadien-Styrol-Kunststoffe
Polycarbonat - Acrylnitril-Butadien-Styrol-Kunststoffe
Polyurethan - Polyamid

## Patentansprüche

1. Verfahren zum stirnseitig dichten Verbinden eines Hohlprofilkörpers aus thermoplastischem Kunststoff mit einem Formkörper aus einem damit verschweißbaren thermoplastischen Kunststoff, dadurch gekennzeichnet, daß man das stirnseitige Endstück des Hohlprofilkörpers, während es in eine in den Formkörper eingeformte, offene Mulde, deren innere Begrenzung dem stirnseitigen Profil des Hohlprofilkörpers angepaßt ist, so eingesetzt ist, daß das Endstück des Hohlprofilkörpers an der Wandung der Mulde anliegt und die Stirnseite mit dem Rand der Muldenwandung eine gemeinsame Kante bildet, in eine Nut eines Schweißwerkzeuges, deren Gestalt der gemeinsamen Kante entspricht, einsenkt und darin auf seinem ganzen Umfang bis zum Verschweißen erwärmt und danach in der Nut unter die Schmelztemperatur erkalten läßt.

2. Verfahren nach dem Anspruch 1, dadurch gekennzeichnet, daß als Hohlprofilkörper ein Block aus einer Mehrzahl von dicht miteinander verbundenen Hohlprofilelementen eingesetzt und an seiner stirnseitigen Umrandung mit dem Formkörper verbunden wird.

## Claims

1. Process for joining a hollow profile body made from thermoplastic plastic, close to the end face, to a moulded body made from a thermoplastic plastic which can be welded therewith, characterised in that the end face end piece of the hollow profile body is lowered into a channel of a welding mould, the shape of which corresponds to the common border, while it is inserted into an open cavity shaped into the moulded body, the inner limit of which is adapted to the end face profile of the hollow profile body, so that the end piece of the hollow profile body rests against the wall of the cavity and the end face forms a common border with the edge of the cavity wall, and can be heated therein to welding temperature over the whole of its periphery and then cooled to below the melting temperature in the channel.

2. Process according to claim 1, characterised in that a block comprising a number of hollow profile elements joined closely to one another is used as the hollow profile body and is joined to the moulded body at its end face border.

## Revendications

1. Procédé pour unir en bout de façon étanche un corps profilé creux en matière thermoplastique à un corps moulé en une matière thermoplastique soudable avec celle de ce corps profilé, caractérisé en ce que tandis que le bout du corps profilé creux du côté frontal est placé dans une cavité ouverte qui est formée dans le corps moulé et dont la délimitation intérieure est adaptée au profil du côté frontal du corps profilé creux, de telle manière que le bout du corps profilé creux soit appliqué contre la paroi de la cavité et que son côté frontal forme une arête commune avec le bord de la paroi de la cavité, on enfonce ce bout dans une gorge d'un outil de soudage dont la forme correspond à l'arête commune et on l'y chauffe sur toute sa circonférence jusqu'au soudage, puis on le laisse refroidir dans la gorge au-dessous de la température de fusion.

2. Procédé selon la revendication 1, caractérisé en ce qu'on utilise, comme corps profilé creux, un bloc de plusieurs éléments profilés creux unis entre eux de façon étanche et on unit ce bloc au corps moulé par sa bordure du côté frontal.

*Fig.1*

Fig. 2

Fig.3